# EUROPEAN PATENT APPLICATION

(11) **EP 4 787 294 A1**
(43) Date of publication of application: **05.08.2026**
(21) Application number: 24872069.0
(22) Date of filing: 20.09.2024
(51) Int. Cl.: G06T 7/00, G06Q 50/10

(54) **IMAGE GENERATION DEVICE, TRAINING DEVICE, VIDEO ANALYSIS SYSTEM, IMAGE GENERATION METHOD, AND PROGRAM**

(30) Priority: 25.09.2023 JP 2023161598
(71) Applicant: Canon Kabushiki Kaisha, Tokyo 146-8501 (JP)
(72) Inventor: TOJO, Hiroshi, Tokyo 146-8501 (JP)
(74) Representative: Canon Europe Limited
(86) International application number: PCT/JP2024/033610
(87) International publication number: WO 2025/070278

(57) **Abstract**

A training apparatus 111 acquires use condition related information related to a use condition from servers 102 and 103 in a user environment 101 and Web sites 106, 107, and 108 in a Web environment 105, based on the use condition of image analysis. The training apparatus 111 extracts item information corresponding to each of image description items from the use condition related information, and generates image description data describing an image expected to be a target of image analysis in a case where the image analysis is used by using the extracted item information. Then, a training image of a model to be used for the image analysis is generated based on the image description data.

## Description

### Technical Field

The present invention relates to machine learning.

### Background Art

In recent years, the application of technologies for analyzing images captured by monitoring cameras has been advancing. For example, a technique for estimating a posture of an entire body of a person has been proposed, and application of this technique has been in progress in fields, such as customer safety management in stores and urban monitoring. Machine learning, particularly a learning model, such as a neural network, is widely used for an image analysis technique. Patent Literature 1 describes a method for fine-tuning a trained neural network model by using test data (images and labels) acquired by an apparatus at an installation site of the user.

### Citation List

### Patent Literature

PTL 1: WO2018/142766

### Summary of Invention

### Technical Problem

In neural networks for image analysis, when the characteristics of input images differ between the training phase (development phase) and the user operation phase, analysis accuracy may not be sufficiently achieved. Examples of such input image characteristics include conditions related to the imaging environment, such as lighting conditions, and statistical tendencies in attributes of analysis targets, such as persons (for example, a higher proportion of subjects in their fifties). As described in PTL 1, methods that utilize test data require performing additional training using images acquired by capturing moving images at a user installation site for a certain period of time. In other words, during a test data creation period, there is an issue that analysis accuracy cannot be sufficiently achieved.

Therefore, in view of the above-described issue, the present invention is directed to a method capable of starting camera tuning earlier than a method in which additional training is performed based on test data acquired after installation of a camera in a specific place. Solution to Problem

According to an aspect of the present disclosure, an image generation apparatus includes acquisition means for acquiring related information related to a use condition based on the use condition of image analysis, description generation means for generating description data based on the related information, the description data describing an image expected to be a target of the image analysis in a case where the image analysis is used, and image generation means for generating a training image for a model to be used for the image analysis based on the description data. Advantageous Effects of Invention

According to the present invention, a camera tuning can be started earlier than a method that executes additional training based on test data acquired after the camera is installed in a specific place.

### Brief Description of Drawings

[Fig. 1] Fig. 1 is a block diagram illustrating an example of a general configuration of an image analysis system.
[Fig. 2] Fig. 2 is a block diagram illustrating an example of a hardware configuration of a training apparatus.
[Fig. 3] Fig. 3 is a block diagram illustrating an example of a functional configuration of the training apparatus.
[Fig. 4] Fig. 4 is a flowchart illustrating processing executed by the training apparatus.
[Fig. 5] Fig. 5 is a flowchart illustrating details of image description data generation processing.
[Fig. 6] Fig. 6 is a diagram illustrating an example of order information.
[Fig. 7] Fig. 7 is an example of a table defining sub items.
[Fig. 8] Fig. 8 is a block diagram illustrating an example of a functional configuration of the training apparatus.
[Fig. 9] Fig. 9 is a flowchart illustrating details of image description data correction processing.
[Fig. 10] Fig. 10 is a diagram illustrating an example of a feedback screen.
[Fig. 11] Fig. 11 is a diagram illustrating an example of an image used for training.

### Description of Embodiments

Hereinafter, embodiments will be described with reference to accompanying drawings.

### <First Embodiment>

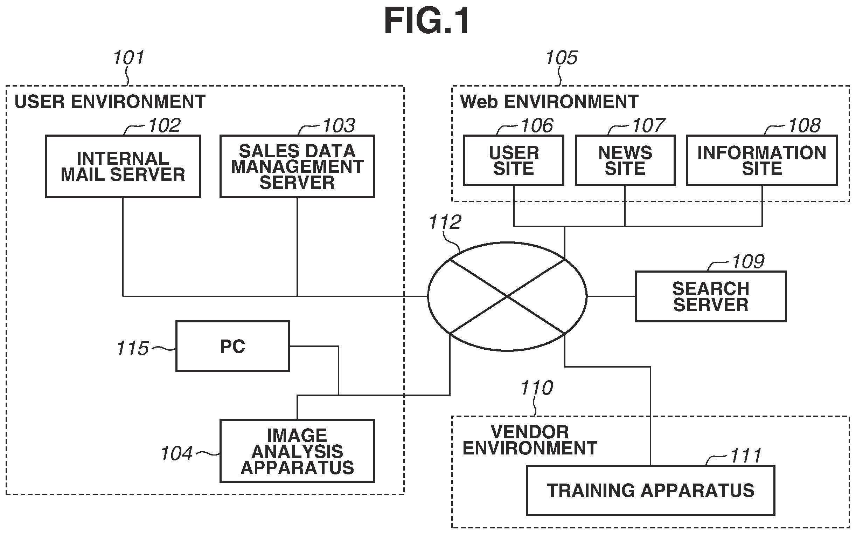

Fig. 1 is a block diagram illustrating an example of an image analysis system according to the present embodiment. An image can be either a moving image or a still image. The following mainly describes a case where the image is a moving image. Further, image analysis is processing for outputting an analysis result depending on an image analysis function by extracting an analysis target object from information captured in an image and identifying a movement and a position of the object. The present embodiment is mainly described with respect to a case where the object is a person. In the present embodiment, image analysis is executed by inputting an image to an image analysis model.

As illustrated in Fig. 1, the image analysis system includes various apparatuses installed in a user environment 101 of a user who uses an image analysis apparatus 104, and a training apparatus 111 installed in a vendor environment 110 of a developer who develops an image analysis model. The various apparatuses installed in the user environment 101 and the training apparatus 111 are connected to an internet 112. Various Web sites in a Web environment 105 and a search server 109 are connected to the internet 112. The training apparatus 111 transmits and receives data to/from the various apparatuses connected to the internet 112.

The image analysis apparatus 104 is an apparatus in which a camera (e.g., monitoring camera) for capturing images and an apparatus for executing image analysis by inputting the captured images to an image analysis model are integrated. The image analysis apparatus 104 further includes a function according to a purpose of image analysis. The training apparatus 111 optimizes the image analysis model according to the function. In the present embodiment, the image analysis apparatus 104 includes a fall down detection function. When the image analysis apparatus 104 is in operation, the image analysis apparatus 104 detects a person's fall from a captured image (input image) by using the fall down detection function. In addition to or instead of the fall down detection function, the image analysis apparatus 104 may include a purchase analysis function, an intrusion detection function, a crowd detection function, and a suspicious behavior detection function. In the present embodiment, the image analysis apparatus 104 is used at a store. However, the image analysis apparatus 104 may be used in a building other than a store, or may be used outside, such as in town.

In the present embodiment, the training apparatus 111 acquires information related to a use condition (use condition related information) from a use condition of the image analysis apparatus 104, and based on the acquired use condition related information, the training apparatus 111 generates an image representing an input image considered to be input when the image analysis apparatus 104 is in operation. Then, the training apparatus 111 uses the generated image as a training image for an image analysis model. Therefore, a training image close to an image expected during operation can be created before the image analysis apparatus 104 starts operation. The training apparatus 111 is an example of an image generation apparatus.

An internal mail server 102, a sales data management server 103, an image analysis apparatus 104, and a personal computer (PC) 115 that are used by a user are installed in the user environment 101. The internal mail server 102 and the sales data management server 103 store various types of data related to user's business and operations. The PC 115 is a terminal apparatus used by the user. The PC 115 displays a user interface (UI) screen received from the training apparatus 111 on a display device (not illustrated) and transmits information input to the UI screen via an input device (not illustrated) to the training apparatus 111.

A user site 106 established by the user, a news site 107 established by a news organization, and an information site 108 where various types of information are organized are provided in the Web environment 105.

A search server 109 searches various Web sites in the Web environment 105 by using a query (keyword) received from the training apparatus 111, and transmits a search result, such as a uniform resource locator (URL), to the training apparatus 111.

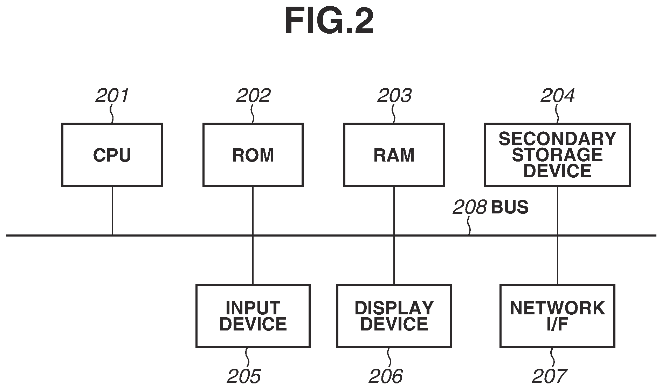

Fig. 2 is a block diagram illustrating a hardware configuration of the training apparatus 111. The training apparatus 111 includes a central processing unit (CPU) 201, a read only memory (ROM) 202, a random access memory (RAM) 203, a secondary storage device 204, an input device 205, a display device 206, and a network interface (I/F) 207. These elements are connected to each other via a bus 208, and transmit and receive data.

The CPU 201 manages general control of the training apparatus 111. Further, a graphics processing unit (GPU) may be used instead of or in addition to the CPU. The ROM 202 is a non-volatile memory storing various programs and various types of data. The RAM 203 is a volatile memory storing frame image data and temporary data generated through processing illustrated in flowcharts described below. The secondary storage device 204 is a rewritable storage device, such as a hard disk drive or a flash memory, and stores image information, programs, and various types of setting information.

The input device 205 includes devices, such as a keyboard and a mouse, via which a developer inputs operations. The display device 206 includes a device, such as a liquid crystal display which displays a processing result for a developer. The network I/F 207 includes a modem and a local area network (LAN) for connecting to networks, such as the internet 112 and an intranet. The CPU 201 reads a program stored in, for example, the ROM 202 or the secondary storage device 204 to the RAM 203 and executes the program, so that processing corresponding to each step of the below-described flowcharts is implemented.

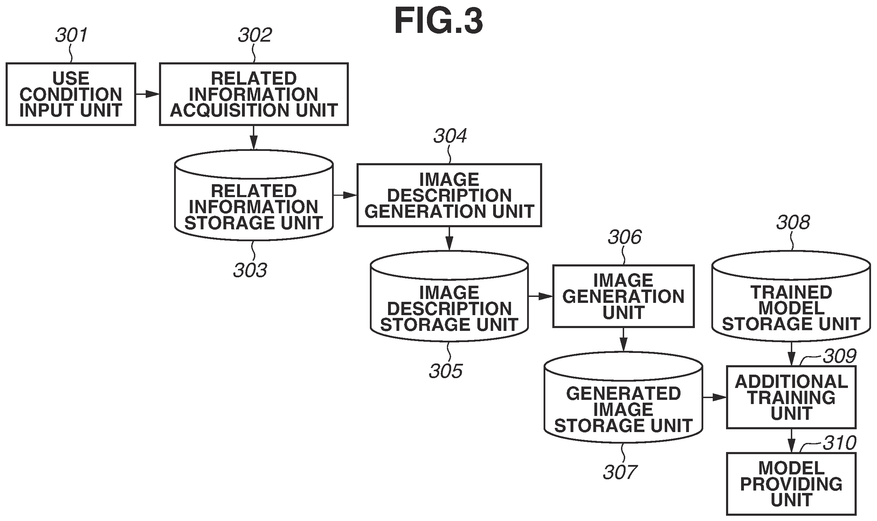

Fig. 3 is a block diagram illustrating a functional configuration of the training apparatus 111 according to the present embodiment. The CPU 201 reads a program stored in, for example, the ROM 202 or the secondary storage device 204 to the RAM 203 and executes the program, so that respective functions illustrated in Fig. 3 are implemented.

A use condition input unit 301 inputs a use condition of the image analysis apparatus 104 that is used by the user.

A related information acquisition unit 302 collects information related to a use condition (use condition related information) input by the use condition input unit 301 from the user environment 101 and the Web environment 105 via the network I/F 207.

A related information storage unit 303 stores the use condition related information collected by the related information acquisition unit 302 in, for example, the secondary storage device 204 or the RAM 203.

An image description generation unit 304 generates image description data based on the use condition related information stored by the related information storage unit 303.

An image description storage unit 305 stores the image description data generated by the image description generation unit 304 in, for example, the secondary storage device 204 or the RAM 203.

An image generation unit 306 generates an image and a true label to be attached to the image based on the image description data stored by the image description storage unit 305.

A generated image storage unit 307 stores the generated image and the true label generated by the image generation unit 306 in, for example, the secondary storage device 204 or the RAM 203.

A trained model storage unit 308 stores a trained image analysis model corresponding to a function (herein, fall down detection function) included in the image analysis apparatus 104 in, for example, the secondary storage device 204. As for the image analysis model, a known machine learning method, such as a neural network, is used.

An additional training unit 309 executes additional training of the image analysis model stored by the trained model storage unit 308 using the generated image and the true label stored by the generated image storage unit 307.

A model providing unit 310 transmits the image analysis model acquired by executing the additional training to the image analysis apparatus 104 via the network I/F 207.

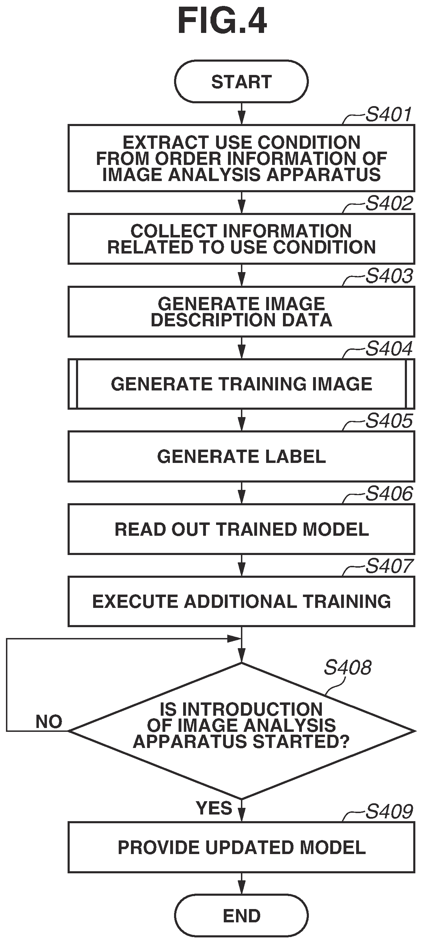

Fig. 4 is a flowchart illustrating details of processing executed by the training apparatus 111 according to the present embodiment. In the below description, each step is expressed by a reference numeral prefixed with a symbol "S", and a word "Step" is omitted.

First, in S401, the use condition input unit 301 acquires order information of the image analysis apparatus 104. Then, the CPU 201 extracts and acquires a use condition of the image analysis apparatus 104 to be used by a user from the acquired order information.

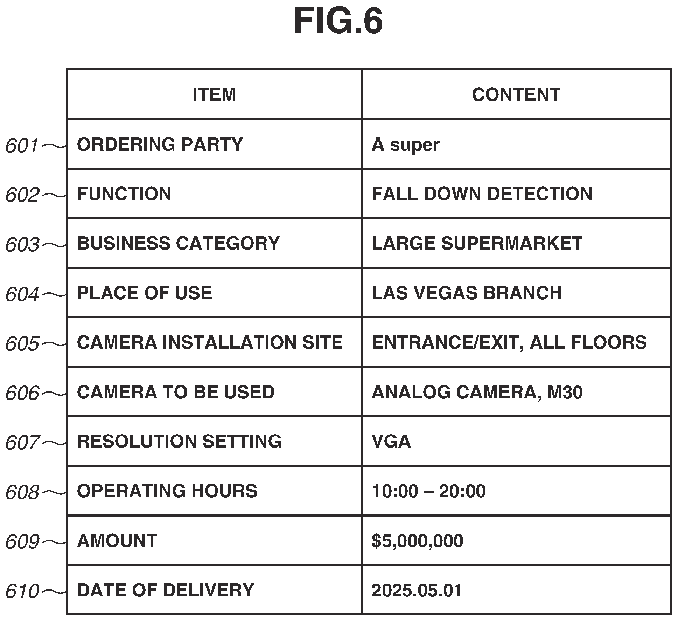

Fig. 6 illustrates an example of order information in a case in which the image analysis apparatus 104 is used at a store. The order information is generated when the developer receives an order of the image analysis apparatus 104 from the user. For example, the order information is stored in a data server installed in the vendor environment 110. The use condition input unit 301 acquires the order information from the data server via the network I/F 207. The order information illustrated in Fig. 6 includes contents corresponding to various items, such as an ordering party 601, a function 602, a business category 603, a place of use 604, a camera installation site 605, a camera to be used 606, a camera setting 607 such as a resolution to be set, operating hours 608, an amount 609, and a date of delivery 610. The ordering party 601 describes a name of a store using the image analysis apparatus 104. The function 602 describes an image analysis function according to a use purpose of the image analysis apparatus 104. The business category 603 describes a type of the store that is to use the image analysis apparatus 104. The place of use 604 describes a branch name of the store where the image analysis apparatus 104 is to be used. The camera to be used 606 describes information about a model of a camera for capturing images.

The following describes a case in which contents corresponding to the prescribed items (in the example in Fig. 6, the items 601 to 610) related to use conditions are extracted from the respective items of the order information as the use conditions. Alternatively, some contents corresponding to part of the items 601 to 610 may be extracted. Further, a method for the extraction is not limited to the method in which the use conditions are extracted from the order information, and a UI screen (not illustrated) for inputting the use conditions may be transmitted to the PC 115 by the use condition input unit 301, to acquire information input by the user through the UI screen as the use conditions.

In S402, the related information acquisition unit 302 collects use condition related information based on the use conditions acquired in S401. Conditions of an image expected to be captured when the image is captured under the use conditions acquired in S401 and information for specifying the conditions are included in the use condition related information. The image description storage unit 305 stores the collected use condition related information in, for example, the secondary storage device 204 or the RAM 203 as needed.

The use condition related information is related to a background of the image. For example, the use condition related information is related to a physical object present in a background, a lighting condition, an image-capturing range, and image quality. A physical object present in a background refers to a type of a physical object expected to be present in the background; for example, a store shelf when the installation site is a store, and a road when the installation site is in town. Further, a lighting condition is information for specifying a sunshine condition (a weather or operating hours) when the installation site is outside, and a lighting condition is a type of light source or a window size when the installation site is inside. An influence of outside light can be specified from a window size. For example, an image-capturing range refers to information about a lens mounted on a camera to be used (information indicating whether a lens is a wide-angle lens or a telephoto lens, information about a focal length, and the like), and an installation position and an angle of the camera. Image quality refers to image quality of an entire image, which is, for example, performance and a resolution setting of a camera to be used. Information is not limited in particular, as long as the information is related to the background of the image.

Further, the use condition related information is related to an attribute of a person in the image. For example, the use condition related information is related to a type (for example, an age, a gender, a race, clothes, and a posture) of a person expected to be captured in the image.

The related information acquisition unit 802 searches the Web environment 105 or the user environment 101 for the above-described information related to a background of the image and an attribute of a person in the image, and acquires information about a Web page as the use condition related information as a result of the search.

In a case where the use condition related information is acquired from the Web environment 105, the related information acquisition unit 802 acquires the use condition related information from the Web environment 105 by using the search server 109.

For example, the related information acquisition unit 802 searches for the information by using "fall down" described in the function 602 as a query. For example, as a search result, the related information acquisition unit 802 acquires article information describing slip-and-fall fraud from the news site 107. The article information includes, for example, text information, "There was a slip-and-fall fraud case. A white male in his fifties, wearing a dress shirt, fell down by himself in a beverage section and sued a store."

Further, the related information acquisition unit 802 searches for information by using "A super" described in the ordering party 601 as a query. As a search result, for example, the related information acquisition unit 802 acquires general information of a store, such as a floor guide and business hours, from the user site 106 of the A super.

Further, the related information acquisition unit 802 searches for information by using "Las Vegas branch" described in the place of use 604 as a query. As a search result, for example, the related information acquisition unit 802 acquires a population ratio by race and/or age in Las Vegas from the information site 108.

Further, the related information acquisition unit 802 searches for information by using a model name "M30" described in the camera to be used 606 as a query. As a search result, for example, the related information acquisition unit 802 acquires a review article about M30 from the information site 108. The review article includes text information related to image quality, such as information stating "high definition in the daytime, but high noise in the night-time."

In a case where the use condition related information is acquired from the user environment 101, the related information acquisition unit 802 acquires the use condition related information from the user environment 101 by using a search server (not illustrated) that is capable of accessing the internal mail server 102 and the sales data management server 103.

The related information acquisition unit 802 acquires information about a testimony from the other store, such as information stating that "the New York store claimed that a male customer in his fifties has been injured after falling down in the vegetable section." from the internal mail server 102.

Further, the related information acquisition unit 802 acquires data related to attributes of persons, such as data indicating that "the customer demographic includes 50% in their forties and 40% in their fifties", from the sales data management server 103.

In S403, the image description generation unit 304 generates image description data based on the use condition related information acquired in S402. The image description data is data described in text, which is used to generate an image expected to be captured when the image analysis apparatus 104 is used. In the present embodiment, the image description data is generated according to a format defined for each of the image analysis functions.

Examples of templates of image description data for respective image analysis functions are described below.

### 1. Fall Down Detection Function

Generate a {Image Quality} image in which a {Race} {Gender} in {Age Group} wearing {Clothes} is falling down in {Image-Capturing Place} in {Time}

### 2. Gradient Analysis Function

Generate a {Image Quality} image in which a {Race} {Gender} in {Age Group} wearing {Clothes} is extending his or her hand in {Image-Capturing Place} in {Time}

### 3. Intrusion Detection Function

Generate a {Image Quality} image in which a {Race} {Gender} in {Age Group} wearing {Clothes} has entered {Area} in {Image-Capturing Place} in {Time}

The race and the age in brackets ({}) described above represent image description items. The image description generation unit 304 extracts information corresponding to the respective image description items from the use condition related information acquired in S402, and generates image description data in a plurality of variations by using the extracted information and templates according to the image analysis function. Hereinafter, information corresponding to the image description item is also called item information. The image description items described in the image description data 1 to 3 are merely examples, and not limited in particular as long as the items are related to the background of an image and an attribute of an analysis target object (herein, a person).

Each of the above-described examples of image description data 1 to 3 describes a positive example where a detection target is present. However, depending on the function, image description data for a negative example where a non-detection target is present is necessary. For example, with respect to the image description data 1 for the fall down detection function, image description data for a negative example can be generated by changing the description "falling down" to another content such as "walking" or "standing".

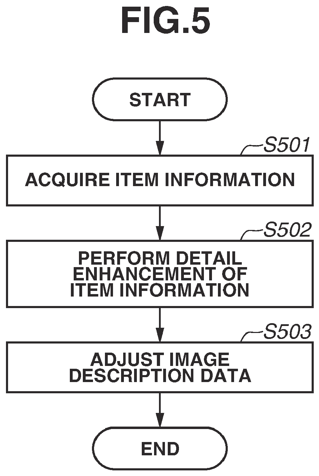

Hereinafter, details of the processing for generating image description data executed in S403 are described with reference to the flowchart in Fig. 5.

In S501, the image description generation unit 304 acquires information corresponding to each of image description items from the use condition related information acquired in S402. Specifically, the image description generation unit 304 removes unnecessary information, such as an HTML tag, from the Web page stored in, for example, the secondary storage device 204 or the RAM 203 as the use condition related information, and extracts text information. Then, in a case where the extracted text information is described in Japanese, morphological analysis is executed to break down the text information into parts of speech, and information corresponding to each of the image description items is extracted by matching nouns with a dictionary in which the nouns are classified into types such as a race, an age, and a gender. Alternatively, the information about each of the image description items may be extracted by using a large language model, such as the Generative Pre-trained Transformer (GPT).

For example, from the above-described article information indicating that "There was a slip-and-fall fraud case. A white male in his fifties wearing a dress shirt fell down by himself in a beverage section and sued a store", an age "50", clothes "Dress Shirt", a race "White", and a gender "Male" are acquired as the item information related to attributes of the person. Further, as the item information related to a background of the image, an image capturing place "Beverage Section" is acquired.

Further, from the above-described review article indicating that "high definition in the daytime, but high noise in the night-time," time/image quality "Daytime/High Definition", and time/image quality "Night-Time/High Noise" are acquired as the item information related to a background of the image. By using the acquired information, the image description generation unit 304 generates the following image description data:
"Generate a high-definition image in which a white male in his fifties wearing a dress shirt is falling down in a beverage section in the daytime."
"Generate a high-noise image in which a white male in his fifties wearing a dress shirt is falling down in a beverage section in the night-time."

Next, in S502, the image description generation unit 304 performs detail enhancement of the information corresponding to each of the image description items. Because the information corresponding to the image description item is extracted from the use condition related information, the information describes the content close to the image to be actually captured at the installation site of the user. Therefore, it is desirable to secure variations of the image generated from the information corresponding to the image description item as much as possible. Thus, the image description generation unit 304 increases the variations of image description data by performing detail enhancement of the information (item information) corresponding to each of the image description items.

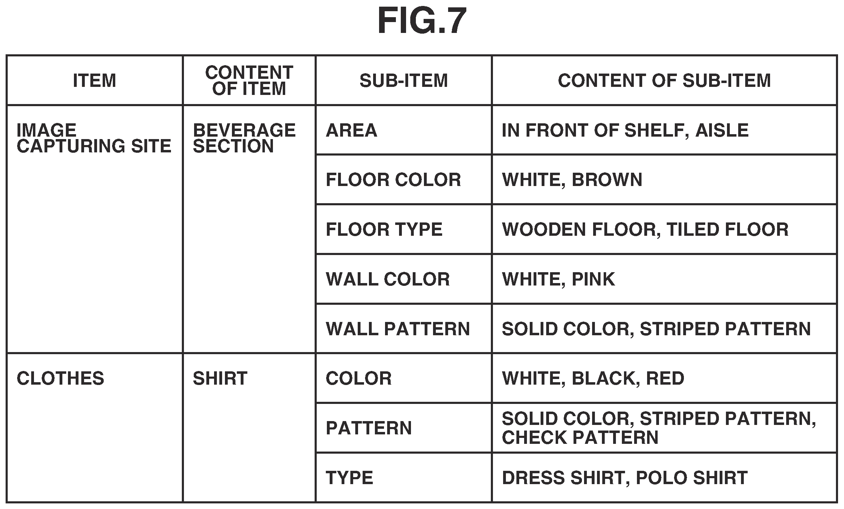

Specifically, the image description generation unit 304 adds information corresponding to a sub-item to the item information. The sub-item is a lower-level item for performing detail enhancement of the item information. In a case where "Beverage Section" is extracted as "Image-Capturing Place", for example, the image description generation unit 304 acquires "Area" within a sales floor as a sub-item, and adds information corresponding to "Area", such as "In front of a shelf" and "Aisle". Further, in a case where "Shirt" is extracted as "Clothes", for example, the image description generation unit 304 acquires "Color" and "Pattern" as sub-items of "Shirt", and adds the information corresponding to "Color", such as "White", "Black", and "Red", and the information corresponding to "Pattern", such as "Solid Color", "Stripe", and "Check". Fig. 7 is an example of a table defining sub-items. The image description generation unit 304 refers to the table as illustrated in Fig. 7, and acquires a sub-item as a lower-level item of the item information and information corresponding to the sub-item.

For example, with respect to the image description data described above, the image description generation unit 304 generates the following variations of image description data by performing detail enhancement of the image-capturing place "Beverage Section" and the clothes "Dress Shirt": "Generate a high-definition image in which a white male in his fifties wearing a solid-white dress shirt is falling down in front of a shelf at a beverage section in the daytime."
"Generate a high-definition image in which a white male in his fifties wearing a solid-black dress shirt is falling down in front of a shelf in a beverage section in the daytime."
"Generate a high-definition image in which a white male in his fifties wearing a solid-red dress shirt is falling down in front of a shelf in a beverage section in the daytime." "Generate a high-definition image in which a white male in his fifties wearing a white-striped dress shirt is falling down in front of a shelf in a beverage section in the daytime."
(and so on)

As described above, sub-items are combined with information corresponding to each of image description items, and information corresponding to the sub-items is acquired, so that it is possible to increase the variations of image description data.

Herein, the use condition related information includes information which describes an image having a high possibility (high credibility) of being actually captured, such as the information about a testimony from the other store. The image description generation unit 304 may execute adjustment in such a manner that more variations are generated, from the information acquired from the highly-important use condition related information. The importance described above is determined depending on, for example, an acquisition source of the use condition related information. The image description generation unit 304 may specify only an image description item acquired from testimony information as a target of detail enhancement, or may increase the number of sub-items for the image description item acquired from the testimony information, in comparison with the number of sub-items for the image description item acquired from information other than the testimony information. As described above, the image description generation unit 304 adjusts the number of pieces of image description data to be generated based on the use condition related information, depending on the importance of the use condition related information.

Further, for example, there is a case where ratio information such as "forties: 50%, fifties: 40%", is extracted from the use condition related information acquired from the sales data management server 103 and the information site 108. In this case, it is considered that the persons expected to be captured in images will have similar ratios. Therefore, the image description generation unit 304 may execute adjustment in such a manner that the ratio of image description data corresponding to the age "forties" and the ratio of image description data corresponding to the age "fifties" in the entirety of the generated image description data become 50% and 40%, respectively.

Next, in S503, the image description generation unit 304 executes adjustment in accordance with the image description item. Since the use condition related information describes typical content of an image to be actually captured, there may be bias such that specific information is frequently included for a certain image description item. However, some of the image description items may cause inconvenience such as an ethical issue because a person with a specific attribute, for example, a specific race or gender, is detected easily. In response to the above-described issue, the image description generation unit 304 may execute adjustment in order to prevent the ratio of image description data including specific information as a prescribed image description item to the entire generated image description data from being a threshold value or greater. Specifically, in a case where the ratio is the threshold value or greater, random thinning is performed on generated image description data until the ratio falls below the threshold value.

The image description generation unit 304 stores the plurality of pieces of image description data generated in the above-described way in, for example, the secondary storage device 204 or the RAM 203. As described above, a series of processing for generating the image description data is ended.

Return to description of Fig. 4. In S404, the image generation unit 306 generates a training image based on the image description data generated in S403. Specifically, a pre-trained model capable of expressing text and an image in a common vector, for example, Contrastive Language-Image Pre-training (CLIP), is used. The image generation unit 306 encodes the image description data by using CLIP as a text encoder, and uses a diffusion model as a condition for generating an image. In this way, it is possible to acquire an image according to the image description data. Because a plurality of images close to the encoded image description data may be present, a plurality of images can be acquired from a piece of image description data.

Next, in S405, the image generation unit 306 uses the image description data for the training image generated in S404 to generate a true label. The true label is defined for each template of the image description data. With respect to "falling down" included in the above-described image description data 1, "falling down" is defined as a true label, and with respect to "walking" and "standing" described as the examples of a negative example, "not falling down" is defined as a true label. The generated image storage unit 307 attaches the true label to the plurality of generated images generated in S404, and stores the generated images in, for example, the secondary storage device 204 or the RAM 203.

Next, in S406, the additional training unit 309 reads out a trained image analysis model from, for example, the secondary storage device 204. An image analysis model, which has been trained by the developer using existing images retained for each of image analysis functions, is stored in the secondary storage device 204. The additional training unit 309 reads out the image analysis model corresponding to the function to be used (in the present embodiment, fall down detection).

In S407, the additional training unit 309 executes additional training of the image analysis model read out in S406 based on the generated images and the true label stored in S405. Specifically, by using a weight of the trained model as an initial value, the CPU 201 may fix a weight of a front-end (backbone) that extracts basic features of the model, and updates only a weight of a back-end. A training method is not particularly limited to the above-described method, and a method for updating a weight of the entire model can also be used as long as the model can be adapted to the generated images.

In S408, the model providing unit 310 determines whether introduction of the image analysis apparatus 104 is started at the installation site of the user. Specifically, the model providing unit 310 checks whether the introduction is started based on a notification, such as a mail transmitted from the user. The processing waits in S408 until the model providing unit 310 determines that introduction of the image analysis apparatus 104 is started. In a case where the model providing unit 310 determines that introduction of the image analysis apparatus 104 is started, the processing proceeds to S409.

In S409, the model providing unit 310 transmits a model updated by the additional training in S407 to the image analysis apparatus 104. For example, the image analysis apparatus 104 may download the updated model from the training apparatus 111 via the internet 112. The image analysis apparatus 104 executes image analysis by inputting an image captured by the camera to the image analysis model provided from the training apparatus 111. Then, a series of processing illustrated in the flowchart in Fig. 4 is ended.

According to the above-described embodiment, image description data describing an image expected to be captured actually is generated from the information related to a user's use condition of the image analysis apparatus, and a training image can be generated based on the image description data. In this way, it is possible to train an image analysis model by using an image close to an image to be captured when the apparatus at the installation site of the user is operated, without asking the user to provide an image actually captured by the apparatus at the installation site of the user. In other words, it is possible to execute highly accurate image analysis from a start of the operation of the apparatus at the installation site of the user.

### <Second Embodiment>

In the first embodiment, a training image generated based on the image description data is directly used for the additional training. In a second embodiment, the user is asked to check a training image generated based on image description data, and the training image is used for additional training after reflecting feedback from the user. In this way, a training image more appropriate for the use environment can be generated. Descriptions of a portion common to the first embodiment are omitted, and a portion different from the first embodiment is mainly described.

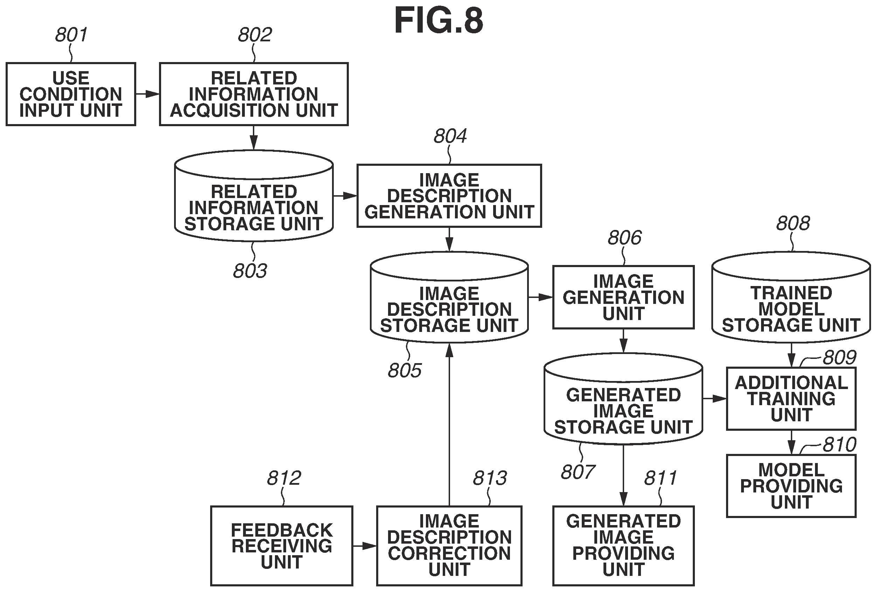

Fig. 8 is a block diagram illustrating a functional configuration of a training apparatus 111 according to the present embodiment. A use condition input unit 801, a related information acquisition unit 802, a related information storage unit 803, an image description generation unit 804 in Fig. 8 correspond to the use condition input unit 301, the related information acquisition unit 302, the related information storage unit 303, and the image description generation unit 304 in Fig. 3, respectively. Further, an image description storage unit 805, an image generation unit 806, and a generated image storage unit 807 in Fig. 8 correspond to the image description storage unit 305, the image generation unit 306, and the generated image storage unit 307 in Fig. 3, respectively. Furthermore, a trained model storage unit 808, an additional training unit 809, and a model providing unit 810 in Fig. 8 correspond to the trained model storage unit 308, the additional training unit 309, and the model providing unit 310 in Fig. 3, respectively.

A generated image providing unit 811 transmits an image generated by the image generation unit 806 to a PC 115 at the site of the user via the network I/F 207.

A feedback receiving unit 812 receives text information which has been input by the user as feedback via the PC 115.

An image description correction unit 813 corrects the image description data stored by the image description storage unit 805.

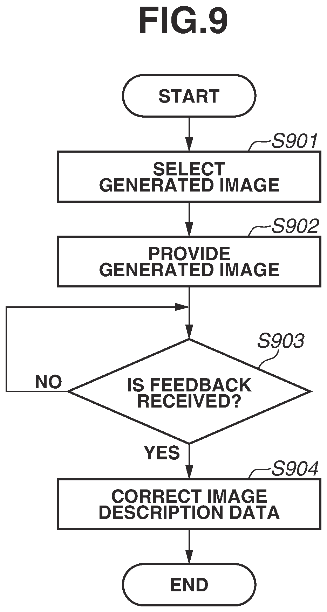

A basic procedure of processing executed by the training apparatus 111 according to the present embodiment is similar to the procedure of the processing illustrated in the flowchart in Fig. 4. Hereinafter, processing for performing a correction based on feedback from the user, which is characteristic processing according to the present embodiment, is described with reference to Fig. 9.

After images are generated in S404 in Fig. 4, in S901, the generated image providing unit 811 selects generated images to be provided to the user. As it is not realistic to ask the user to check all generated images, generated images are selected and provided to the user. Here, any method can be used, and example methods for selecting the images include a method in which images are randomly selected by a prescribed number, and a method in which only images generated based on image description data including specific information as a prescribed image description item are selected.

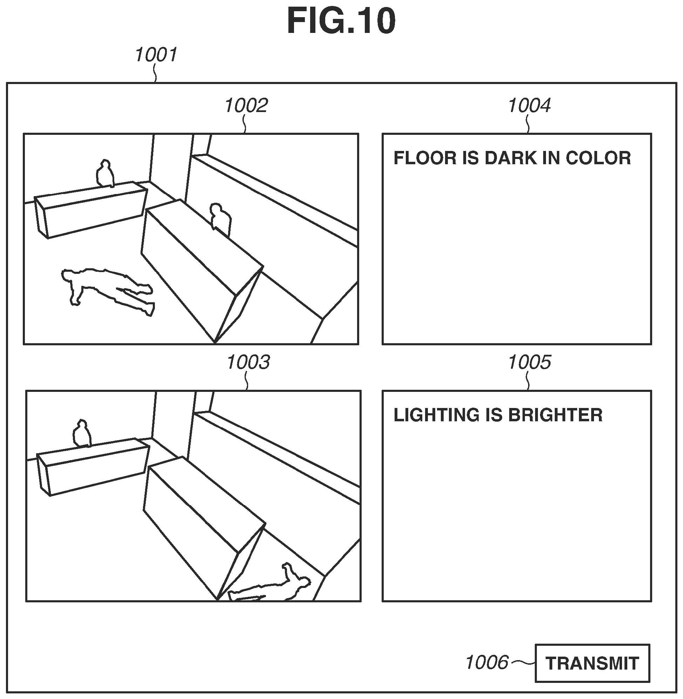

Next, in S902, the generated image providing unit 811 transmits the generated images selected in S901 to the PC 115 via the internet 112. The generated image providing unit 811 transmits data in an HTML format to display a checking UI screen having a screen layout illustrated in Fig. 10 to receive feedback from the user, instead of directly providing the generated images. By the above method, the generated image providing unit 811 presents a checking UI screen displaying the generated images selected in S901 to the user.

Fig. 10 is a diagram illustrating an example of a screen layout of the checking UI screen presented to the user. The checking UI screen is displayed on a display device of the PC 115. Images 1002 and 1003 (herein, two images) selected in S901 are displayed on a checking UI screen 1001. The images 1002 and 1003 are generated from image description data. Entry fields 1004 and 1005 where the user inputs comments in text are respectively arranged on the right side of the images 1002 and 1003. When the user presses a transmit button 1006 after inputting feedback to the entry fields 1004 and 1005 via an input device of the PC 115, the PC 115 transmits the content (text information) in the entry fields 1004 and 1005 to the training apparatus 111 via the internet 112.

Next, in S903, the feedback receiving unit 812 determines whether feedback (text information) is received from the PC 115. The processing waits in S903 until the feedback receiving unit 812 receives the feedback, and in a case where the feedback receiving unit 812 determines that feedback is received, the processing proceeds to S904.

In S904, the image description correction unit 813 corrects the image description data stored in, for example, the secondary storage device 204 or the RAM 203 based on the text information received in S903. The image description correction unit 813 acquires information corresponding to each of the image description items from the received text information by a method described in S501. The image description correction unit 813 adds information to, or replaces information with the existing image description data by using information acquired from the text data.

In the example illustrated in Fig. 10, text information such as "Floor is dark in color." and "Lighting is brighter." are acquired as the feedback. Based on the feedback, the information such as "dark colored floor" and "bright lighting" is added to the image description data, so that the image can be closer to the image to be captured actually. The processing in S404 and subsequent steps in Fig. 4 is executed based on the image description data corrected as the above. In other words, the image generation unit 306 regenerates the image by using the image description data corrected by the processing illustrated in the flowchart in Fig. 9.

According to the above-described embodiment, it is possible to correct the image description data by receiving the user feedback with respect to the generated images. In this way, it is possible to train an image analysis model by using an image close to an image to be captured when the apparatus at the site of the user is operated, without asking the user to provide an image actually captured by the apparatus at the installation site of the user. In other words, it is possible to execute highly accurate image analysis from a start of introduction of the apparatus at the installation site of the user.

### <Other Embodiments>

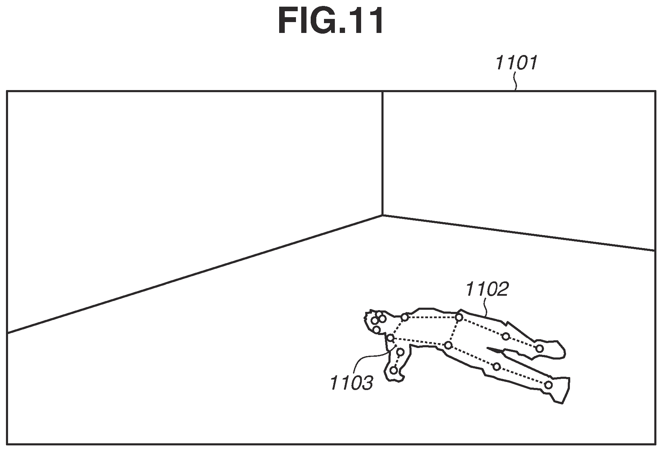

In the above-described embodiment, although the image generation unit 306 generates an image based on only the image description data, the image may be generated by using the existing image displayed on the news site 107 in combination with the image description data. For example, there is a case in which the image description generation unit 304 acquires an image 1101 in Fig. 11 from a Web page stored as the use condition related information. A person 1102 who has fallen down is captured in the image 1101. Improvement in accuracy of the fall down detection function can be expected when a posture of the person 1102 who has fallen down can be reflected on a training image. Therefore, the image description generation unit 304 acquires information about joint points of the person 1102 (the joint points are indicated by circle marks 1103, and a dotted line indicates a line segment connecting the joint points) by using a method, such as "OpenPose". Then, the image generation unit 306 generates an image including a person with a similar posture by a method, such as "ControlNet", by using the acquired joint point information as a condition. In this way, the image generation unit 306 generates an image reflecting the features of the acquired image 1101. Here, because this is the description of a case using the fall down detection function, joint points of a person are acquired as the features of the image. However, as long as the features are related to the image analysis function, the features acquired from the image are not limited in particular. For example, the image generation unit 306 may generate an image including a similar background by using a result acquired by dividing an image into units, such as a wall and a floor. As described above, by using the existing image in combination, it is possible to generate an image having the features similar to the features of the existing image used in combination.

A storage medium storing a program for implementing a function of the training apparatus 111 according to each of the above-described embodiments may be supplied to a system or an apparatus, so that a computer (or a CPU, a micro processing unit (MPU), or a GPU) included in the system or the apparatus may read and execute the program code stored in the storage medium. Further, the present embodiment is not limited to a configuration in which the function according to the above-described embodiment is implemented by a computer by reading and executing a program code. The present embodiment also includes a configuration in which an operating system (OS) operating on the computer executes all or a part of actual processing based on an instruction of the program code.

Further, a configuration in which the function of the training apparatus 111 according to the above-described embodiment is implemented by the following method is also included. A program code read from a storage medium is written into a memory included in a function expansion card inserted to a computer or a function expansion unit connected to the computer. Then, a CPU included in the function expansion card or the function expansion unit executes all or a part of the actual processing based on the instruction of the program code. A program code corresponding to the above-described flowchart is stored in the storage medium.

Although the present invention has been described above together with embodiments, the above embodiments are merely examples showing concrete implementations for carrying out the present invention, and the technical scope of the present invention must not be construed in a limited manner by these embodiments. That is, the present invention can be implemented in various forms without departing from the technical spirit or essential features thereof.

The present invention can also be realized by supplying, via a network or a storage medium, a program for implementing one or more functions of the above-described embodiments to a system or device, and causing one or more processors of a computer of the system or device to read and execute the program. The present invention can also be realized by a circuit (for example, an ASIC) that implements one or more of the functions.

The disclosure of each of the above embodiments includes the following configurations, methods, and programs.

### (Configuration 1)

An image generation apparatus comprising:
acquisition means for acquiring related information related to a use condition based on the use condition of image analysis;
description generation means for generating description data based on the related information, the description data describing an image expected to be a target of the image analysis in a case where the image analysis is used; and
image generation means for generating a training image for a model to be used for the image analysis, based on the description data.

### (Configuration 2)

The image generation apparatus according to configuration 1, wherein the acquisition means acquires, as the use condition, at least one of a name of a store where a camera for capturing an image serving as a target of the image analysis is to be installed, a business category in which the camera is to be used, and information related to a place where the camera is to be installed, and acquires the related information based on the use condition.

### (Configuration 3)

The image generation apparatus according to configuration 1, wherein the acquisition means acquires, as the use condition, at least one of a type of a camera for capturing an image serving as a target of the image analysis, an image-capturing resolution of the camera, an image-capturing time of the camera, and a type of the image analysis, and acquires the related information based on the use condition.

### (Configuration 4)

The image generation apparatus according to any one of configurations 1 to 3, wherein the description generation means acquires item information corresponding to a prescribed description item from the related information, and generates the description data described in a format according to a function of the image analysis based on the item information.

### (Configuration 5)

The image generation apparatus according to configuration 2, wherein the prescribed description item is an item related to at least one of a physical object present in a background of an image, a lighting condition, an image-capturing range, and image quality.

### (Configuration 6)

The image generation apparatus according to configuration 2 or 3, wherein the prescribed description item is an item describing an attribute of an object serving as an analysis target.

### (Configuration 7)

The image generation apparatus according to any one of configurations 1 to 6, wherein the acquisition means searches a Web site for a Web page related to the use condition, and acquires the related information from text information included in the searched Web page.

### (Configuration 8)

The image generation apparatus according to configuration 7, wherein the image generation means generates the training image based on the description data and a feature extracted from an existing image included in the searched Web page.

### (Configuration 9)

The image generation apparatus according to any one of configurations 1 to 8, wherein the acquisition means acquires the related information from a server that is managed by a user who uses the image analysis.

### (Configuration 10)

The image generation apparatus according to any one of configurations 1 to 9, further comprising training means for training a model that is used for the image analysis using the training image generated by the image generation means.

### (Configuration 11)

The image generation apparatus according to any one of configurations 4 to 6, wherein the description generation means increases variations of the description data by performing detail enhancement of the item information.

### (Configuration 12)

The image generation apparatus according to any one of configurations 4 to 6 and 11, wherein the description generation means performs control to adjust a ratio of the description data including specific information of the item information to the entirety of the generated description data.

### (Configuration 13)

The image generation apparatus according to any one of configurations 1 to 12, wherein the description generation means performs control to adjust the description data generated from the related information according to importance of the related information.

### (Configuration 14)

The image generation apparatus according to any one of configurations 1 to 13, further comprising:
presentation means for presenting the training image generated by the image generation means to a user who uses the image analysis;
receiving means for receiving feedback with respect to the presented training image; and
correction means for correcting the description data based on the feedback.

### (Configuration 15)

The image generation apparatus according to configuration 14, wherein the presentation means presents the training image and a screen on which an entry field for a comment on the training image is displayed.

### (Configuration 16)

The image generation apparatus according to configuration 10, further comprising transmission means for transmitting the model trained by the training means to an apparatus for executing the image analysis in the use condition.

### (Configuration 17)

The image generation apparatus according to any one of configurations 1 to 16, wherein the model is a neural network.

### (Configuration 18)

An image analysis system comprising: an image analysis apparatus configured to execute image analysis of an image captured by a camera; and a training apparatus configured to train a model for the image analysis,
wherein the training apparatus includes:
acquisition means for acquiring related information related to a use condition based on the use condition of the image analysis apparatus;
description generation means for generating description data based on the related information, the description data describing an image expected to be a target of image analysis that is executed by the image analysis apparatus;
image generation means for generating an image based on the description data; and
training means for training the model for the image analysis by using an image generated by the image generation means,
wherein the image analysis apparatus comprises analysis means for executing the image analysis using the model trained by the training means.

### (Method)

An image generation method comprising:
an acquiring step for acquiring related information related to a use condition based on the use condition of image analysis;
a generating step for generating description data based on the related information, the description data describing an image expected to be a target of the image analysis in a case where the image analysis is used; and
an image generating step for generating a training image for a model to be used for the image analysis based on the description data.

### (Program)

A program that causes a computer of an image generation apparatus to function as:
acquisition means for acquiring related information related to a use condition based on the use condition of image analysis;
description generation means for generating description data based on the related information, the description data describing an image expected to be a target of the image analysis in a case where the image analysis is used; and
image generation means for generating a training image for a model to be used for the image analysis based on the description data.

The present invention is not limited to the above-described embodiments, and various changes and modifications may be made without departing from the spirit and scope of the present invention. Therefore, in order to make public the scope of the present invention, the following claims are appended.

This application claims the benefit of Japanese Patent Application No. 2023-161598, filed September 25, 2023, which is hereby incorporated by reference herein in its entirety.

### Explanation of Reference Numerals

- 102: internal mail server
- 103: sales data management server
- 104: image analysis apparatus
- 106: user site
- 107: news site
- 108: information site
- 111: training apparatus
- 112: internet

## Claims

1. An image generation apparatus comprising:
acquisition means for acquiring related information related to a use condition based on the use condition of image analysis;
description generation means for generating description data based on the related information, the description data describing an image expected to be a target of the image analysis in a case where the image analysis is used; and
image generation means for generating an image to be used for the image analysis based on the description data.

2. The image generation apparatus according to claim 1, wherein the acquisition means acquires, as the use condition, at least one of a name of a store where a camera for capturing an image serving as a target of the image analysis is to be installed, a business category in which the camera is to be used, and information related to a place where the camera is to be installed, and acquires the related information based on the use condition.

3. The image generation apparatus according to claim 1, wherein the acquisition means acquires, as the use condition, at least one of a type of a camera for capturing an image serving as a target of the image analysis, an image-capturing resolution of the camera, an image-capturing time of the camera, and a type of the image analysis, and acquires the related information based on the use condition.

4. The image generation apparatus according to claim 1, wherein the description generation means acquires item information corresponding to a prescribed description item from the related information, and generates the description data described in a format according to a function of the image analysis based on the item information.

5. The image generation apparatus according to claim 4, wherein the prescribed description item is an item related to at least one of a physical object present in a background of an image, a lighting condition, an image-capturing range, and image quality.

6. The image generation apparatus according to claim 4, wherein the prescribed description item is an item describing an attribute of an object serving as an analysis target.

7. The image generation apparatus according to claim 1, wherein the acquisition means searches a Web site for a Web page related to the use condition, and acquires the related information from text information included in the searched Web page.

8. The image generation apparatus according to claim 7, wherein the image generation means generates the training image based on the description data and a feature extracted from an existing image included in the searched Web page.

9. The image generation apparatus according to claim 1, wherein the acquisition means acquires the related information from a server that is managed by a user who uses the image analysis.

10. The image generation apparatus according to claim 1, further comprising training means for training a model that is used for the image analysis using the image generated by the image generation means.

11. The image generation apparatus according to claim 4, wherein the description generation means increases variations of the description data by performing detail enhancement of the item information.

12. The image generation apparatus according to claim 4, wherein the description generation means performs control to adjust a ratio of the description data including specific information of the item information to the entirety of the generated description data.

13. The image generation apparatus according to claim 1, wherein the description generation means adjusts the description data generated from the related information according to importance of the related information.

14. The image generation apparatus according to claim 1, further comprising:
presentation means for presenting the image generated by the image generation means to a user who uses the image analysis;
receiving means for receiving feedback with respect to the presented image; and
correction means for correcting the description data based on the feedback.

15. The image generation apparatus according to claim 14, wherein the presentation means presents the image and a screen on which an entry field for a comment on the image is displayed.

16. The image generation apparatus according to claim 10, further comprising transmission means for transmitting the model trained by the training means to an apparatus for executing the image analysis in the use environment.

17. The image generation apparatus according to claim 1, wherein the model is a neural network.

18. An image analysis system comprising: an image analysis apparatus configured to execute image analysis of an image captured by a camera; and a training apparatus configured to train a model for the image analysis,
wherein the training apparatus includes:
acquisition means for acquiring related information related to a use condition based on the use condition of the image analysis apparatus;
description generation means for generating description data based on the related information, the description data describing an image expected to be a target of image analysis that is executed by the image analysis apparatus;
image generation means for generating an image based on the description data; and
training means for training the model by using an image generated by the image generation means,
wherein the image analysis apparatus comprises analysis means for executing the image analysis using the model trained by the training means.

19. An image generation method comprising:
an acquiring step for acquiring related information related to a use condition based on the use condition of image analysis;
a generating step for generating description data based on the related information, the description data describing an image expected to be a target of the image analysis in a case where the image analysis is used; and
an image generating step for generating an image to be used for the image analysis based on the description data.

20. A program that causes a computer of an image generation apparatus to function as:
acquisition means for acquiring related information related to a use condition based on the use condition of image analysis;
description generation means for generating description data based on the related information, the description data describing an image expected to be a target of the image analysis in a case where the image analysis is used; and
image generation means for generating an image to be used for the image analysis based on the description data.
